# EUROPEAN PATENT SPECIFICATION

(11) **EP 0 831 986 B1**
(45) Date of publication and mention of the grant of the patent: **09.01.2002**
(21) Application number: 96917572.8
(22) Date of filing: 07.06.1996
(51) Int. Cl.: B29C 47/08, B29C 47/10, F04D 3/02

(54) **FEED DEVICE AND METHOD FOR EXTRUDERS**
VERFAHREN UND VORRICHTUNG ZUM MATERIALZUFÜHREN FÜR EINEN EXTRUDER
DISPOSITIF ET PROCEDE D'ALIMENTATION POUR EXTRUDEUSES

(30) Priority: 07.06.1995 GB 9511511
(43) Date of publication of application: 01.04.1998
(73) Proprietor: Munchy Limited, Wallingford, Oxon OX10 9DA (GB)
(72) Inventor: SHIMELL, Richard, John, Bridgwater, Somerset TA6 7HA (GB); SHIMELL, Richard, Michael, Bridgwater, Somerset TA6 7HA (GB)
(74) Representative: Wolff, Francis Paul
(86) International application number: GB9601375
(87) International publication number: WO9640483

(56) References cited:
- US-A- 3 680 975
- US-A- 3 707 224
- US-A- 3 710 983
- US-A- 4 426 018
- US-A- 4 872 546

## Description

This invention concerns polymer processing apparatus and methods, and more particularly feed devices for feeding thermoplastic polymers to apparatus such as screw extruders and screw conveyors, and also apparatus including the feed devices, and methods of using such apparatus.

Screw extruders are widely used in the polymer processing art, an input feed of polymer being worked by a screw rotating within a barrel to bring about melting and mixing of the polymer before the molten polymer is extruded into a desired shape and solidified.

In order to facilitate the extrusion process it is important to ensure that the feed of polymer along the extruder screw and the accompanying transition into a compressed and molten state is at a substantially uniform rate since starvation of the extruder screw of polymer has obvious consequences for the extrusion process. Uniformity of feed is not normally a problem when virgin polymer is used, such polymer being in the form of preformed granules of substantially uniform size, but it can be a serious problem when using recycled polymer as a source of polymer for the extrusion process. As will be appreciated, recycling of polymer is important both from economic and environmental considerations.

Depending upon the source of the polymer to be recycled, it can be in a variety of shapes and sizes, apart from being made of any of a wide variety of polymers. For example, the polymer can be polystyrene, polyethylene, polypropylene or polyester, and it can be in the form of granules, beads, flakes, fibers, strands, films, sheets or various shapes of molding or expanded.

Unlike feeding polymer granules alone, where the granules tend to pack to a uniform density, and indeed often flow under gravity like a liquid into the extruder, polymer in other shapes can cause feed problems since the density of the polymer can change widely from moment to moment as it is being fed. This results from more or less air being trapped between pieces of the polymer being recycled, and indeed the problem can become so serious that the pieces of polymer conglomerate and block the entry to the extruder. Comminution of the polymer feed before it is fed to the extruder can reduce some of these problems by simply reducing the overall size of the feed and increasing its packing by excluding some of the entrapped air. However, this has had limited success.

It has been proposed hitherto to widen the mouth of screw extruders so that feeds of low and variable density can more easily reach the extruder screw, but in practice such extruders tend to block since the feed tends to stick to the flight of the screw rather than being transported along its length. Various proposals have been made hitherto in an attempt to overcome these problems, these usually relying on methods which attempt to compact the feed, thereby reducing the amount of entrapped air and creating a more uniform density of feed.

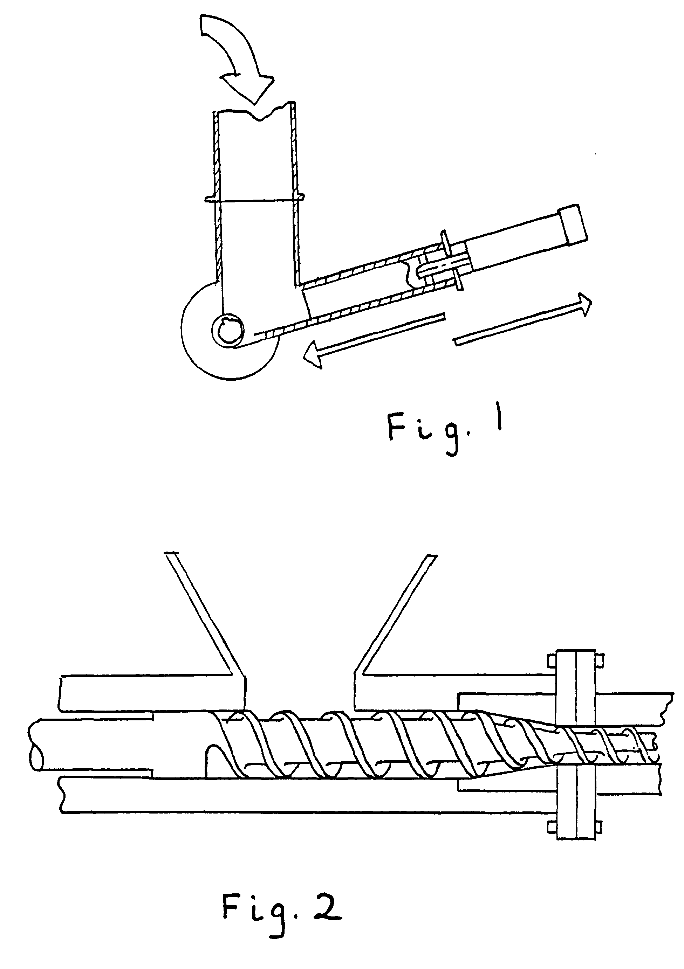

In one such method, a piston is used to feed the recycled polymer under pressure to the extruder screw as shown in Figure 1 of the accompanying drawings. One major limitation of this method is that even after compaction the feed has a low density which causes it to stick to the flight of the extruder screw. When this happens, the feed simply sticks to the flight of the screw rather than being conveyed down the extruder barrel.

In another of such methods, a dual diameter extruder screw is used so that the relatively low density feed of polymer to be recycled is compacted by passing it from the larger diameter screw section to the smaller diameter section, such an extruder being shown in Figure 2 of the accompanying drawings. However, the dual diameter extruder screw has the disadvantage that the ratio of the two diameters cannot change, and it therefore cannot react to variations in the bulk density of the feed. Furthermore, it cannot be readily adjusted to take into account the intrinsic density or melting characteristics of the feed. In general, the rate of feed should be in inverse proportion to the bulk density of the bulk feed.

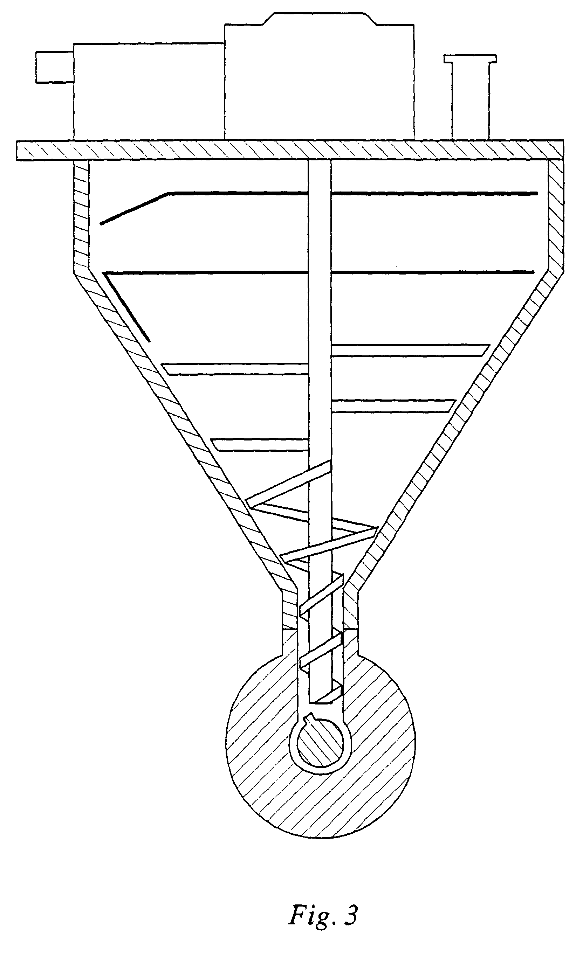

A yet further hitherto proposed method of compacting the feed is to use an auger as shown in Figure 3 of the accompanying drawings. However, like the feed device of Figure 1, this device also suffer from the disadvantage of being mounted at 90° to the extruder screw, leading to undesirable high sideways pressures being exerted on the screw. In addition, the auger does not assist in conveying polymer along the flight of the extruder screw but merely fills the screw flight with the feed under pressure. This again tends to result in the flight becoming blocked by polymer rather than transporting it through the extruder.

Even if free flowing granules are used, it is well known that different polymers require different screw designs, for example in terms of depth of flight, compression ratio and overall length, in order to approach optimum performance, the efficiency of an extruder being measured in simple terms as its output per unit of applied energy. Any wasted energy, for example in the form of recovered heat that is removed from the process in order to exercise process control, is seen as a reduction in efficiency and hence the versatility of the extruder.

Other known apparatus for processing already molten plastic is disclosed in US-A-3 680 975, in which fixed helical flights spaced with clearance from a centrally rotating smooth shaft inside a reservoir direct viscous material near the shaft to roll down the helix into the entrance to a transfer zone where a screw conveyor transfers the polymer to an outlet connectable to polymer fabricating apparatus such as an extruder.

US-A-3 707 224 describes a flexible screw conveyor for granular material and the like, consisting of a wire helix rotated about a central core in a tube, the helix occupying substantially all the space between the tube and the central core.

According to one aspect of the present invention there is provided apparatus for processing comminuted or granular thermoplastic polymer, comprising an inlet for the granular or comminuted polymer, a screw extruder which is adapted to transform the polymer into a compressed and molten plastic state, feed means for feeding the polymer from the inlet to the extruder, and polymer forming means for forming extruded polymer into a desired shape; characterised in that the feed means comprises a shaft exposed, in use, to polymer passing through the apparatus and an auger rotatable about the shaft with a clearance from the shaft such that, on rotating, the auger feeds the comminuted or granular polymer along the shaft and wipes the said polymer from the shaft.

According to a further aspect of the invention there is provided a method of reclaiming waste thermoplastic polymer which comprises passing the said polymer in granular or comminuted form into polymer feed means comprising an auger about a shaft exposed to the polymer, rotating the auger and thereby feeding the polymer along the shaft to a screw extruder while wiping polymer from the shaft by virtue of the clearance between the auger and the shaft, transforming the polymer into a compressed and molten plastic state in the screw extruder, and extruding the polymer through an outlet from the extruder and forming it into a desired shape.

The apparatus and method in accordance with the present invention avoid the flight blocking problems encountered with compactors such as are illustrated in Figures 1 to 3 of the accompanying drawings by constantly wiping the polymer from the shaft and moving it along the length of the shaft. Compaction can be particularly effective with polymer feeds of low and/or variable bulk density. Furthermore, bridging can be substantially reduced, thereby increasing the efficiency of feeding the polymer to screw extruders.

The clearance between the shaft and the auger can be varied as desired, but excessively large clearances can lead to inadequate wiping of the shaft, and very small clearances can lead to undesirable friction between the auger and the shaft. In general a clearance of about 50µm will provide adequate wiping whilst avoiding excessive friction. However, clearances in excess of about 1000µm are usually too large to effect adequate wiping. The preferred range of clearances is from 75 to 500µm.

The auger is preferably substantially helical, although the pitch can, if desired, vary along its length.

The shaft about which the auger rotates can itself be rotatable relative to the auger, for example in the same sense as the auger is rotated or in the opposite sense with respect thereto, or it can be non-rotatable.

The shaft about which the auger is rotatable is preferably heated, this giving rise to a particularly good feeding of polymer. The shaft can be heated in various ways, for example it can include an electrical heater which is preferably thermostatically controlled. Alternatively, if the shaft forms an extension of an extruder screw, it can be heated by transfer of heat along the screw itself. Heating of the shaft improves the ease with which the polymer feed is transformed in shape, size and the bulk density, and hence it improves the feeding characteristics of the polymer into the screw extruder to which the feed device is attached.

Although apparatus in accordance with the present invention can have a large clearance between the external surface of the auger and the interior of the device, it is generally preferred that this clearance is less than 1000µm for at least a part of the external surface of the auger so that wiping of polymer from at least a part of the external surface of the auger is effected. It is generally preferred that when only a part of the external surface of the auger is wiped this is in a region adjacent to the inlet of the screw extruder fed by the feed device.

As will be appreciated by those skilled in the art, if the clearance between the external surface of the auger and the interior of the device is too small, excessive friction may occur between the surfaces. As with the clearance between the auger and the shaft about which it rotates, a clearance of about 50µm will usually provide adequate wiping whilst avoiding excessive friction. A preferred range of clearances is from 75 to 500µm.

Apparatus in accordance with the present invention can be mounted with the shaft about which the auger rotates at various angles with respect to extruder screws. The shaft can, for example, be substantially perpendicular to the rotational axis of the extruder screw, or it can be substantially in line with the rotational axis of the screw.

Apparatus in accordance with the present invention can itself be fed by gravity or otherwise, as desired.

It is preferred that the speed of rotation of the auger about the shaft can be varied. This can be effected, for example, using a drive mechanism which may itself be torque controlled.

The auger can be of the same or opposite hand to that of the extruder screw, the direction of rotation being varied accordingly.

Unlike hitherto proposed extruders, extruders in accordance with the present invention can have a heated throat, heating being, for example, by transfer of heat along the extruder barrel or using a thermostatically controlled heater/cooler. It is also preferred that the aperture to the extruder throat can be cooled to prevent melting and conglomerating of polymer in the aperture.

Apparatus in accordance with the present invention can be used to recycle various thermoplastic polymers, for example polyethylene, polypropylene, polyesters or polystyrene, into screw extruders. For example, the feed can be in the form of granules, beads, flakes, strands, films or sheets. The invention can with particular advantage be used to recycle polyethylene or polypropylene films or expanded polystyrene.

Apparatus of the present invention can also be used in the extrusion of virgin granules with improved versatility and efficiency when compared with conventional extruders where the performance of the screw is largely predetermined by the fixed geometry of the screw design.

Embodiments of polymer feed devices and screw extruder systems for incorporation in apparatus and for use in methods in accordance with the present invention will now be described with reference to Figures 4 to 16 of the accompanying drawings in which:-
- Figure 4: is a part cut away axial section of a first embodiment of screw extruder incorporating a first embodiment of feed device;
- Figure 5: is a part cutaway perspective view of the extruder of Figure 4;
- Figure 6: is a perspective view of the auger of the extruder of Figures 4 and 5;
- Figure 7: is a section on line I-I of Figure 4;
- Figure 8: is a vertical section through a second embodiment of screw extruder and feed device in accordance with the present invention;
- Figure 9: is a vertical section through a third embodiment of screw extruder and feed device in accordance with the present invention;
- Figure 10: is a part cut away vertical section through a fourth embodiment of feed device in accordance with the present invention;
- Figure 11: is a vertical section through a fourth embodiment of screw extruder and feed device in accordance with the present invention;
- Figure 12: is a vertical section through a fifth embodiment of screw extruder and feed device in accordance with the present invention;
- Figure 13: is a vertical section through a waste polymer recycling system in accordance with the present invention;
- Figure 14: is a part cut away view of a sixth embodiment of feed device and screw extruder in accordance with the present invention;
- Figure 15: i is a similar view to that of Figure 14 of another embodiment of feed device and screw extruder; and
- Figure 16: is a vertical section through a yet further feed and extruder system in accordance with the present invention.

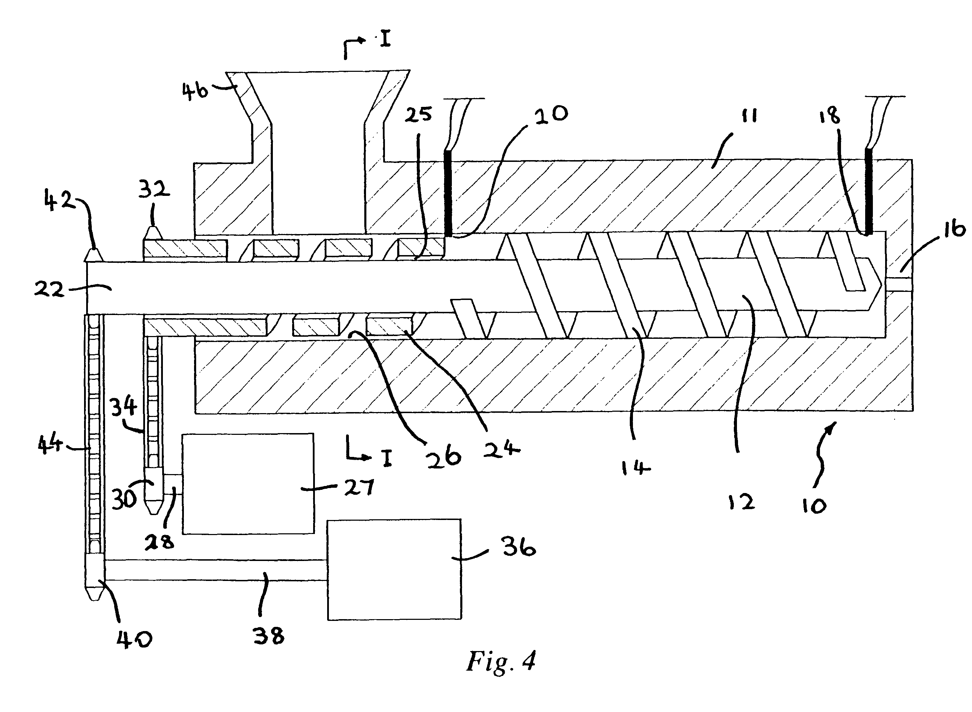

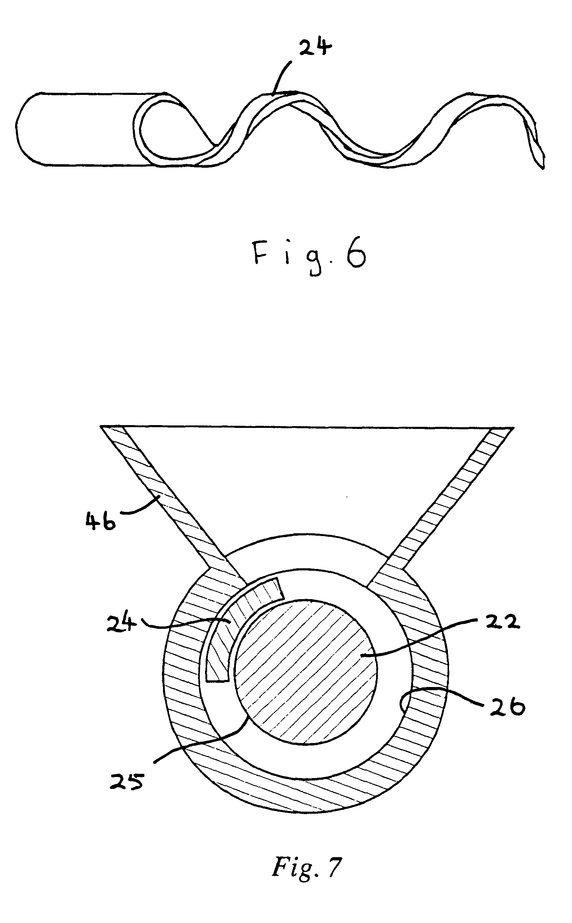

Referring to Figures 4 to 7, the extruder shown generally at 10 has a barrel 11 within which extends a conventional extruder screw 12 having a helical flight 14, so that rotation of the screw 12 causes polymeric material which is for the time being in the space between successive turns of the helical flight 14 to be forcibly moved along the barrel 11. Polymer moved down the flight 14 is extruded through an extrusion die 16 at the downstream end of the barrel 11. Two sensors 18 and 20 in the barrel 11 downstream and upstream respectively of the flight 14 serve to monitor the temperature and/or the pressure within the barrel 11.

A helical auger 24 is disposed along and around an upstream, flightless portion 22 of the screw 12. The auger 24 has a flight of the opposite sense from that of the flight 14 on the downstream end of the screw 12.

There is a small clearance between the auger 24 and the flightless portion 22 so that when the auger 24 is rotated about the portion 22 it can wipe away polymer which is in frictional contact with or which sticks to the portion 22 and move it towards and into engagement with the flight 14.

Rotation of the auger 24 about the flightless portion 22 of the screw 12 is effected using a motor 27 having a motor shaft 28 on which is mounted a gear 30 which engages a drive chain 34 which in turn engages gear teeth 32 on the external surface of the auger 24. The screw 12 is similarly driven, but in the opposite sense to the auger 24, by a motor 36 having a motor shaft 38 with a gear 40 thereon. Gear teeth 42 on the external surface of an end portion of the screw shaft 22 engage a drive chain 44 which also engages the gear 40 so that the motor 36 can drive the shaft 22.

The respective speeds of the motors 27 and 36 can be adjusted in speed and/or torque. This adjustment can be effected manually, in open loop, or they can be controlled by servo-motors. Their speeds can also be controlled using the outputs from the sensors 18 and 20 in order to maintain the polymer being extruded at a substantially constant temperature and/or pressure.

A hopper 46 enables polymer to be fed into the feed device, and more particularly into engagement with the auger 24 and the shaft 22, and thence into the main part of the screw extruder 10.

The auger 24 is rotated in a clockwise sense if it is right-handed, and in the opposite sense if it is oppositely handed. The motor 27 is then used to increase the speed of rotation of the auger 24 if the bulk density of the polymer feed decreases and its speed is decreased if the bulk density of the feed decreases. The speed of rotation of the screw 12 is also adjusted to enable extrusion of the polymer through the die 16 to be controlled as desired. As explained hereinbefore, these speeds can be controlled manually or by a feed-back loop if the motors are torque controlled. Alternatively or additionally the control can use signals from the sensors 18 and 20.

The auger 24 and the shaft 22 both compact and feed polymer fed into the hopper 46 towards the extruder screw 12 as a result of the relative rotational movement of the auger 24 and the shaft 22. The difference in speed of rotation of the auger 24 and the shaft 22, and the small clearance therebetween, cause the auger 24 to wipe the shaft 22 clean of polymer. In addition, the auger 24 has a sufficiently close clearance from the interior surface 26 of the barrel 11 that it also serves to remove polymer from the internal surface 26. Both effects serve to move polymer along the auger and into engagement with the rotating flight 14 of the extruder screw 12.

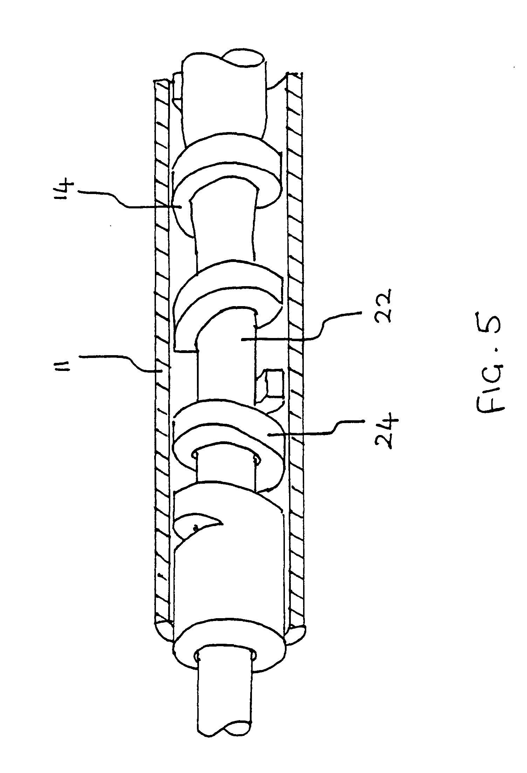

As can be seen from Figure 5, the depth of the flight 14 between successive turns decreases in the downstream direction of the screw 12, thereby serving to compact and melt the polymer as it progresses along the barrel 11.

The shaft 22 is not provided with a separate heater, but may become hot as a result of the work applied to the polymer as a result of the shearing action caused by the rotation of the auger 24 and the screw 12. A separate heater can be included if desired.

The above embodiment is a departure from conventional screw extruder practice in that steps are usually taken to cool the feed zone of screw extruders. By contrast, in accordance with the present invention heat is advantageously applied in the feed zone without risking the disadvantageous effects of adhesion that would have occurred to a conventional screw.

As will be appreciated, the auger 24 feeds the screw flight 14 along its axis rather than at 90° thereto. As a result, polymer is pushed along the flight 14 of the screw 12 rather than into it. Furthermore, the wiping action of the auger 24 on the shaft 22 and with the interior surface 26 of the barrel 11 prevents sticking of the polymer either to the shaft 22 or to the interior 26 of the barrel 11.

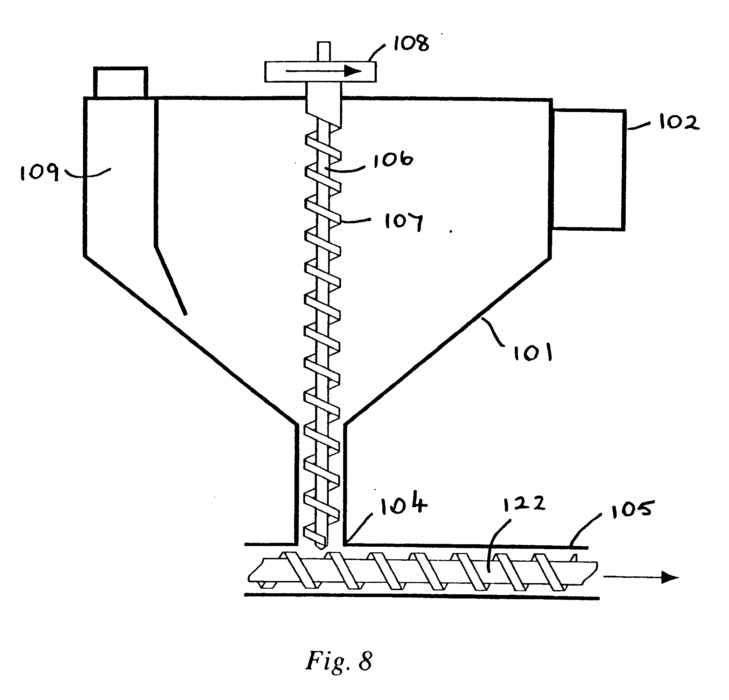

Unlike the embodiment of Figures 4 to 7, the embodiment shown in Figure 8 feeds polymer at 90° to an extruder screw 122. The illustrated feed device consists of a hopper 101 into which polymer to be recycled, for example polymer film edge trim, can be introduced via an inlet 102.

Mounted vertically within the hopper 101 and extending towards the mouth 104 of a screw extruder 105 is an electrically heatable stationary cylindrical shaft 106. Disposed around, and in wiping proximity to the shaft 106, is a substantially helical auger 107, the auger being rotatable about the shaft 106 by a motor 108.

The hopper 101 also includes an optional compartment 109 for polymer granules which can be mixed with polymer being recycled or used to start up the extruder.

In use, the shaft 106 can be initially heated, the motor 108 is started, and the auger 107 is rotated. Polymeric material to be recycled is introduced into the inlet 102 and thence into the hopper 101 where it is progresses towards the mouth 104 of the extruder 105 under the frictional influence of the auger 107 about the shaft 106. The polymer then enters the mouth 104 of the extruder 105 and is extruded therefrom in conventional manner. As a result of the action of the auger 107 on the shaft 106, the bulk density of the recycled polymer is increased, and problems with feeding of the polymer into the extruder 105 are reduced.

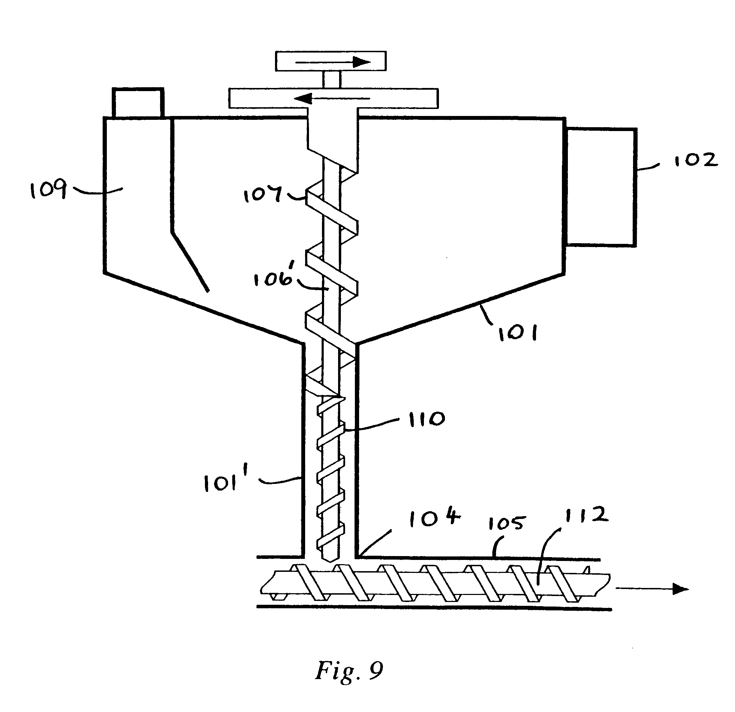

The embodiment in Figure 9 is substantially similar to that in Figure 8. However, the core 106' is rotatable and also includes a flight 110 at its lower end, the flight of the auger 107 being of the opposite sense to that of the flight 110 on the core 106'. In addition, a lower portion of the hopper 101' extends downwardly and substantially parallel to the flight 110 to guide polymer from the hopper 101 into the extruder 105.

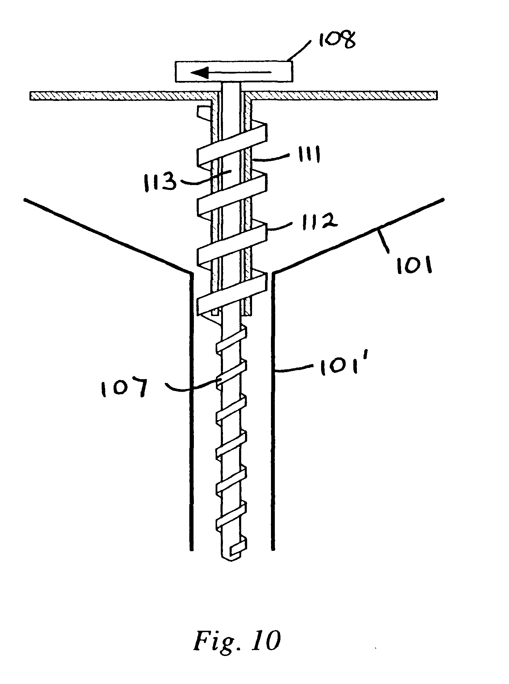

Figure 10 shows a variant of the embodiment of Figure 8. In this variant, the auger 107 is in two sections, a lower section extending around and being connected to a drive shaft 113, and an upper section 112 which is in wiping proximity to a tubular shaft 111 about which the upper section 112 can rotate and wipe polymer therefrom.

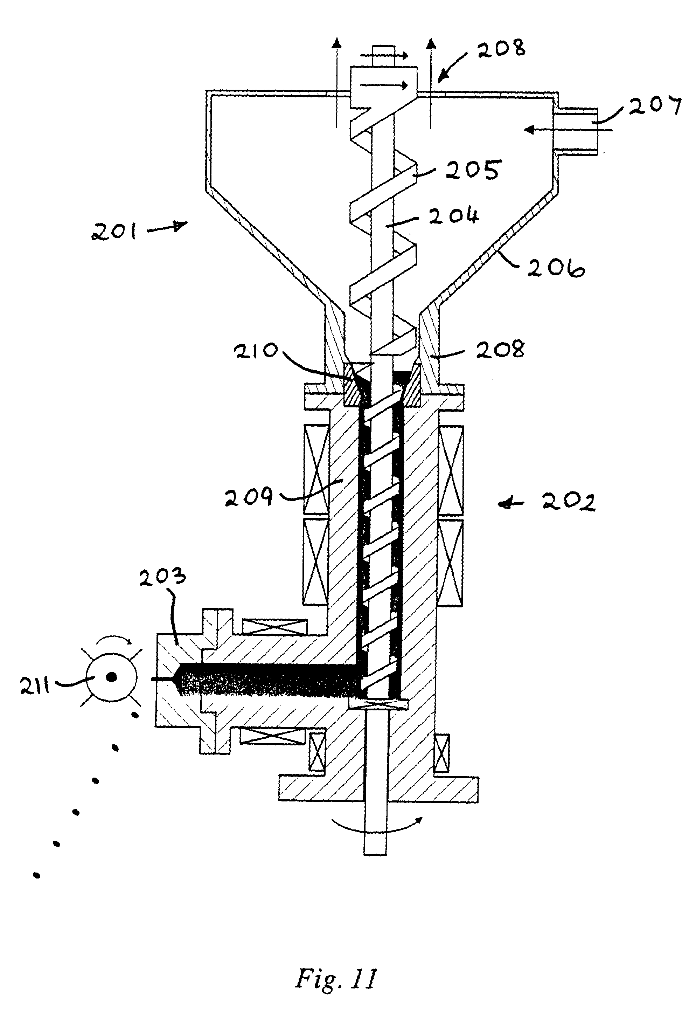

Figure 11 shows a system in accordance with the present invention which can be used to produce reclaimed granules from waste polymer. The system has a feed device in accordance with the invention shown generally at 201 which feeds polymer vertically downwardly into a screw extruder shown generally at 202. Molten polymer from the extruder 202 is then fed horizontally to an extrusion die where the polymer is cut using a face cutter to produce granules of reclaimed polymer.

The feed device 201 includes a vertical shaft 204, which is an extension of the screw of the screw extruder 202, around which and in wiping proximity thereto is a substantially helical auger 205. The flights of the shaft 204 and the auger 205 are of the same sense. The auger 205 is rotatable about the shaft 204 by a variable speed motor (not shown), the screw 204 also being rotatable by a motor (not shown). The senses of rotation of the auger 205 and the shaft 204 are the same and are as indicated.

The shaft 204 and the auger 205 are positioned within a casing which has an upper cylindrical portion, and a lower, substantially frusto-conical portion 206 which tapers inwardly towards the inlet of the extruder 202.

In use, waste polymer is fed in an air current into the feed device 201 through an inlet aperture 207. Polymer contacts the shaft 204, and air used to blow the waste into the device exits through an outlet 208. The speed of rotation the auger 205 relative to that of the shaft 204 is adjusted so that polymer contacting the shaft 204 is pushed vertically downwardly through the casing into a cylindrical region 208 which acts as an extension of the frusto-conical portion 206 of the casing. A lower portion of the external surface of the auger 205 has a wiping clearance between it and the internal surface of the region 208, thereby removing polymer from the external surface of the auger 205 and facilitating feeding of the waste into the extruder 202.

Between the cylindrical region 208 and the extruder barrel 209 is a transition zone 210 where the diameter of the flow path of the polymer is reduced and the polymer feed to the extruder is compressed.

Melting of the polymer occurs as a result of the shearing and heating applied within the transition zone 210 and the heated barrel 209, and the molten polymer is forced by the extruder through a die 203 where it is cut into granules using a conventional face cutter 211.

The system shown in Figure 11 is particularly suitable for recycling polymers which tend to form bridges with the flight of the auger 205, for example polymer in the form of trim or flake.

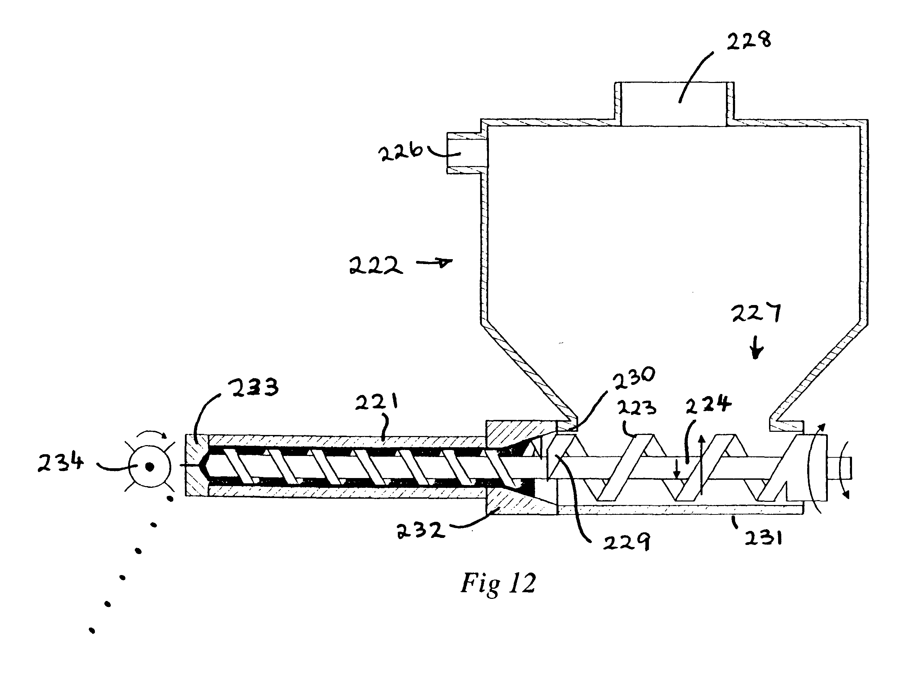

The system shown in Figure 12 has a horizontal extruder 221 fed by a feed device 222 which feeds polymer horizontally into the extruder 221. The feed device 222 has an auger 223 with its flight in wiping proximity to and around an extension 224 of the screw 225 of the extruder 221, the auger 223 working within a barrel 231. The auger 223 can be rotated about the extension 224 in the sense shown using a variable speed motor (not shown). The shaft 225 with its extension 224 is also rotatable by a motor (not shown), the shaft 225 and the auger 223 being rotated in opposite senses because the flights of the auger and the screw of the extruder are of opposite senses.

As with the system shown in Figure 11, waste polymer is blown in a current of air into the feed device, this being through an inlet 226 into the interior of a feed device 222. Polymer in the air flow falls to the bottom of the interior of the feed device 222 into a wide throat 227, the entraining air leaving through exit 228.

Polymer entering the throat 227 is pushed by the relative movement between the extension 224, the wall of the barrel 231 and the auger 223 into the extruder barrel 221, the width of the throat 227 serving to reduce bridging of the auger 223 and the extension 224 by the polymer.

An external portion 229 of the auger 223 nearest to the extruder 221 is wiped by a portion of the internal surface 230 of the barrel 230 due to the clearance therebetween. Compaction of the polymer feed also occurs.

A transition zone 232 between the feed device 222 and the extruder 221 serves to increase the density of the polymer entering the extruder.

Molten polymer from the extruder 221 is forced through a die 233 where it is cut into granules using a cutter 234.

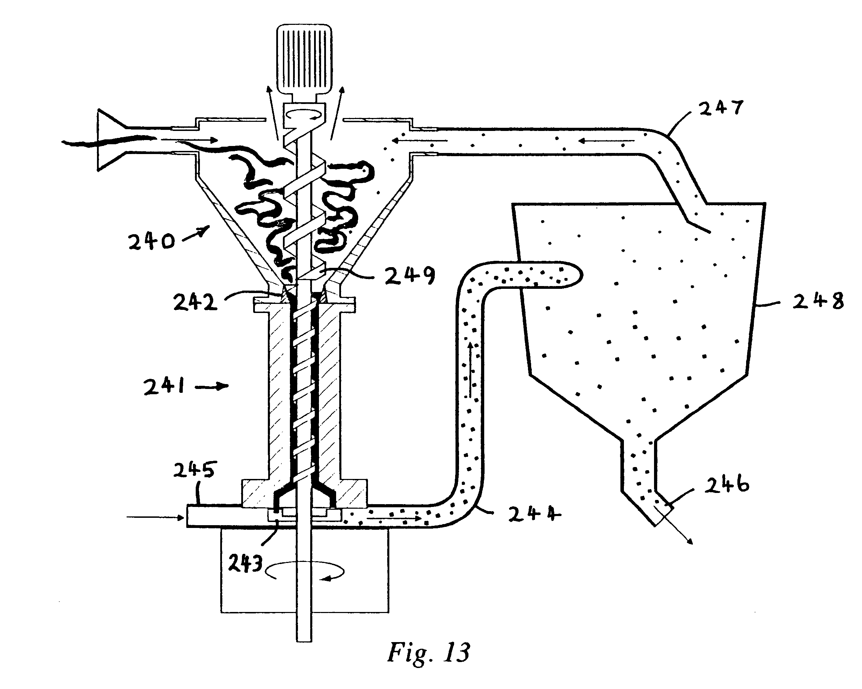

Figure 13 shows a vertical section through a system in accordance with the present invention for reclaiming waste polymer and producing granules of a particular size.

The illustrated system includes a vertically acting polymer feed device 240 substantially similar to that of Figure 11 which feeds a vertical extruder 241 via a transition zone 242. Although the lower end of the auger 249 in this Figure is not shown in wiping engagement with the internal surface of the lower portion of the body of the device, as in Figure 11, it should be appreciated that this can with advantage be the case for the reasons given relation to the embodiment shown in Figure 11.

Polymer from the extruder 241 is extruded through a die with a face cutter 243 to produce granules which are blown through a conduit 244 by air from an inlet 245. The entrained granules are fed into a cyclone separator 248 where size segregation of the granules takes place. Granules of the desired size are fed from the separator 248 through an outlet 246 where they are collected for re-use. Granules of the wrong size and polymer dust from the cutter 243 are entrained in a portion of the air from the inlet 245 via a conduit 247 into the feed device 240 for re-processing.

Recycling systems of the type described with reference to Figure 13 have the advantage of enabling the temperature of the polymer during the reclaim process to be kept low, which also enables thermal degradation of the polymer to be kept low. As will be appreciated by those skilled in the art, although low extrusion and granulating temperatures often result in the production of fines, recycling of the fines using systems such as are shown in Figure 13 enables the effect of this disadvantage to be reduced.

As will also be appreciated by those skilled in the art, other types of separator than cyclone separators can be used to effect size segregation of the granules for example produced by the cutter 243. However, separators which use air flow in the separation process have the advantage that the air flow used in the separation process can also be used to feed granules from where they are produced to the separation process and in addition to feed polymer material of the wrong size from the separator back to the feed device for re-processing and granulation.

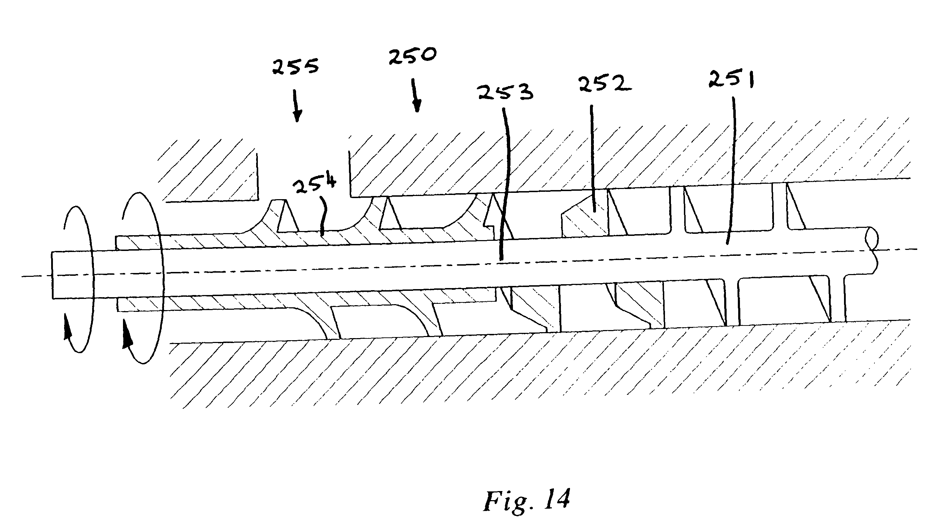

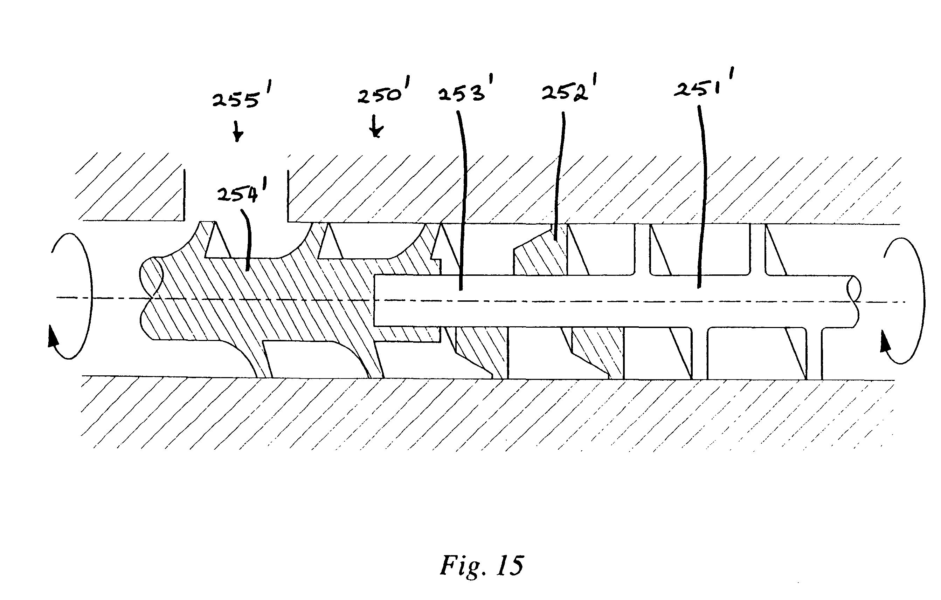

Figures 14 and 15 show a further modification of systems in accordance with the present invention. Both Figures show a cut away view of a combination of a feed device 250, 250' and extruder screw 251, 251', the feed devices 250, 250' each including an auger 252, 252' which is rotatable about a shaft 253, 253' forming an extension of the respective extruder screws 251, 251'. The augers 252, 252' function in substantially the same manner as has already been described in detail with reference to other Figures, the shaft 253 and the auger 252 in Figure 14 both being driven by motors (not shown) at one end of the system, and the shaft 253' and the auger 252' in Figure 15 being driven by motors (not shown) at opposite end of the system.

Unlike the feed devices of systems described with reference to earlier Figures, the feed devices 250, 250' of Figures 14 and 15 each include a screw extension 254, 254' of their respective augers 252, 252' which are so positioned with respect to the feed throats 255, 255' of the feed devices 250, 250' that polymer entering the throats cannot directly engage the respective shafts 251, 251' of the respective extruders.

In use, the screw extensions 254, 254' feed polymer from the respective throats 255, 255' to the respective augers 252, 252', and thence into contact with the respective shafts 251, 251' where feeding and compacting of the polymer occurs with wiping by the close proximity of the augers 252, 252' to the shafts 251, 251'. When polymer granules are processed using these embodiments, they usually remain in a substantially solid state in the screw extensions 254, 254', melting and compacting then occurring in later stages of their progress through the system.

Figures 14 and 15 also show a modification of the cross-section of the flights of the respective augers 252, 252'. Instead of having a substantially rectangular cross-section as shown, for example with reference to Figure 4, in these Figures, the outer surface area of the flight which wipes the interior of the barrel with which it co-operates is less than its length of the flight radially inwardly from the barrel. The advantage of such an arrangement is that it tends to reduce the possibility of polymer becoming jammed between the auger 252, 252' and the interior of the barrel as it is being fed to the extruder, and such an arrangement can be used in general with feed devices in accordance with the present invention.

Feed devices as shown in Figures 14 and 15 can be used to process a wide variety of polymer types.

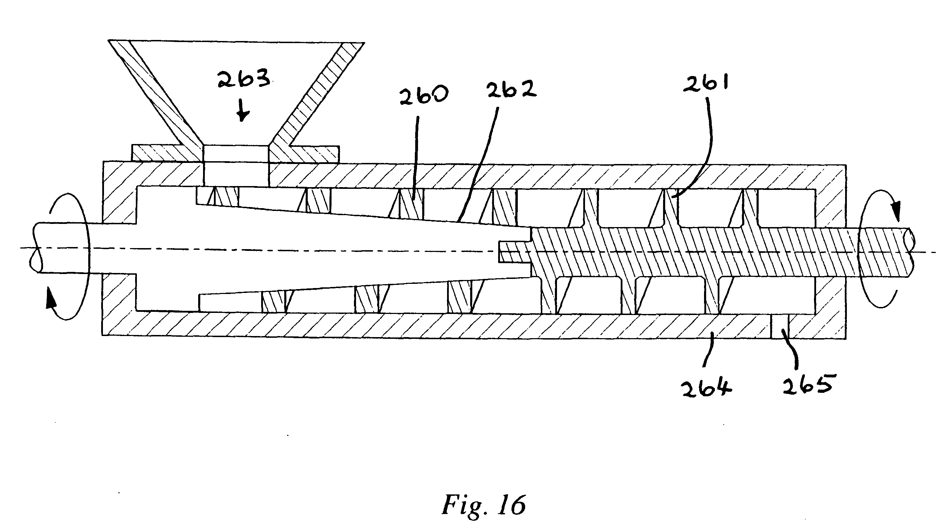

The system shown in Figure 16 differs from those described in previous Figures in that the auger 260 is an extension of the extruder screw 261. The auger 260 is in wiping proximity to and extends around and along a tapered shaft 262, the shaft 262 and the extruder screw 261 being rotatable by motors (not shown) located at opposite ends of the system.

Polymer to be processed in the system is fed into the feed device through a throat 263 where it makes contact with the tapered shaft 262 and is then driven by the auger 260 into the extruder barrel 264 where the compacted polymer is melted and fed to an outlet 265 for further processing such as the formation of granules or the production of other shapes of product.

As will be appreciated by those skilled in the art, systems in accordance with the present invention which don't have one can, if desired, include a transition zone where the pressure on the polymer is increased between the feed device and the extruder screw.

## Claims

1. Apparatus for processing thermoplastic polymer in loose solid form by compaction, melting and extrusion, comprising an inlet (228) for the loose polymer, a screw extruder (221) which is adapted to transform the polymer into a compressed and molten plastic state, and feed means (222) for compacting the loose polymer from the inlet and feeding it to the extruder screw; wherein the feed means comprises an auger (223) which is rotatable about a shaft (224) exposed, in use, to loose solid polymer passing through the apparatus and which has a clearance from the shaft such that, on rotating relative to the shaft, the auger compacts and feeds the loose solid polymer along the shaft and wipes the said polymer from the shaft, and a portion of the external surface of the auger (223) and an interior surface of the apparatus have a wiping clearance between them, so that the interior surface of the apparatus wipes polymer from at least part of the external surface of the auger.

2. Apparatus according to claim 1, wherein the clearance between the auger (223) and the shaft (224) is from 50 to 1000µm.

3. Apparatus according to claim 2, wherein the clearance between the auger (223) and the shaft (224) is from 75 to 500µm.

4. Apparatus according to any one of the preceding claims; wherein the auger (223) is substantially helical.

5. Apparatus according to any one of the preceding claims, wherein the shaft (224) is substantially in line with the rotational axis of the screw extruder (221).

6. Apparatus according to. any one of the preceding claims, wherein the shaft (224) is rotatable with respect to the axis of rotation of the auger (223).

7. Apparatus according to claim 6, wherein the shaft (224) is an upstream, flightless portion of the screw extruder (221).

8. Apparatus according to any one of the preceding claims, wherein the speed of rotation of the auger (223) about the shaft (224) is adjustable.

9. Apparatus according to any one of the preceding claims wherein the auger is of greater outside diameter than the extruder screw.

10. Apparatus according to any one of the preceding claims comprising a frusto-conical transition zone where the diameter of the flow path of the polymer is reduced as the auger feeds compacted polymer to the screw extruder.

11. Apparatus according to any one of the preceding claims wherein at least part of the external surface of the auger (223) has a clearance of less than 1000µm from an interior surface of the apparatus (231), whereby to wipe polymer from at least part of the external surface of the auger as the auger rotates.

12. Apparatus according to claim 11 wherein the said clearance is from 75 to 500µm.

13. Apparatus according to any one of the preceding claims, wherein the screw extruder is heatable.

14. Apparatus according to any one of the preceding claims further comprising a cutter (234) at the extrusion outlet (233) for cutting extruded polymer into granules.

15. Apparatus according to claim 14 further comprising a separator (248) for separating granules of a desired size from the granules of extruded polymer and means (247) for returning the remainder of the extruded polymer to the inlet.

16. Apparatus according to claim 15 wherein the separator is a cyclone separator (248) and the means for returning polymer to the inlet includes an air stream.

17. A method of reclaiming waste thermoplastic polymer which comprises passing the said polymer in loose solid form into polymer feed means (222) for feeding compacted polymer to a screw extruder (221), transforming the polymer into a compressed and molten plastic state in the screw extruder, and extruding the polymer through an outlet (233) from the extruder; wherein the polymer feed means comprises an auger (223) rotatable with clearance about a shaft (224) exposed to the loose solid polymer, and the method comprises rotating the auger and thereby compacting and feeding the loose solid polymer along the shaft to the screw extruder while wiping loose solid polymer from the shaft by virtue of the clearance between the auger and the shaft and wiping loose solid polymer from at least part of the external surface of the auger by an internal surface of the apparatus, which internal surface has a wiping clearance from the auger.

18. A method according to claim 17, wherein the shaft (224) is substantially in line with the rotational axis of the screw extruder (221) and the auger (223) has flights which are of the same sense as the screw of the extruder, which comprises rotating the auger and the extruder in the same sense, and adjusting the speed of rotation of the auger relative to the shaft.

19. A method according to claim 18 or claim 19 which comprises reducing the flow path of the polymer as it is fed between the polymer feed means and the screw extruder.

20. A method according to any one of claims 17 to 19 wherein the loose solid form, in which the waste thermoplastic polymer is passed into the feed means, is trim, flake, film or sheet.

21. A method according to any one of claims 17 to 20, which comprises forming the extruded polymer into particles.

22. A method according to claim 21, which comprises subjecting the particles to size separation, separating out particles of a desired size, and returning the remainder of the particles to the polymer feed means.

## Patentansprüche

1. Einrichtung zur Verarbeitung von thermoplastischem Polymer in loser fester Form durch Verdichten, Schmelzen und Extrudieren, enthaltend einen Einlaß (228) für das lose Polymer, einen Schneckenextruder (221), der in der Lage ist, das Polymer in einen komprimierten und geschmolzenen, plastischen Zustand zu überführen, und eine Zuführvorrichtung (222) zum Verdichten des losen Polymers vom Einlaß und zum Zuführen desselben zu der Extruderschnecke, bei der die Zuführvorrichtung eine Schnecke (223) aufweist, die um eine im Betrieb dem sich durch die Einrichtung bewegenden losen, festen Polymer ausgesetzten Welle (224) drehbar ist, und die im Abstand von der Welle liegt, derart, daß die Schnecke bei Drehung relativ zur Welle das lose, feste Polymer verdichtet und entlang der Welle fördert und dieses Polymer von der Welle abstreift, wobei ein Abschnitt der Außenfläche der Schnecke (223) und eine Innenfläche der Einrichtung einen Abstreifabstand voneinander haben, derart, daß die Innenfläche der Einrichtung Polymer von mindestens einem Teil der Außenfläche der Schnecke abstreift.

2. Einrichtung nach Anspruch 1, bei der der Abstand zwischen der Schnecke (223) und der Welle (224) im Bereich von 50 bis 1.000 µm liegt.

3. Einrichtung nach Anspruch 2, bei der der Abstand zwischen der Schnecke (223) und der Welle (224) im Bereich von 75 bis 500 µm liegt.

4. Einrichtung nach einem der vorhergehenden Ansprüche, bei der die Schnecke (223) im wesentlichen schraubenlinienförmig ausgebildet ist.

5. Einrichtung nach einem der vorhergehenden Ansprüche, bei der die Welle (224) im wesentlichen in Linie mit der Rotationsachse des Schneckenextruders (221) liegt.

6. Einrichtung nach einem der vorhergehenden Ansprüche, bei der die Welle (224) in bezug auf die Rotationsachse der Schnecke (223) drehbar ist.

7. Einrichtung nach Anspruch 6, bei der die Welle (224) ein stromaufwärts liegender, schneckengangfreier Abschnitt des Schneckenextruders (221) ist.

8. Einrichtung nach einem der vorhergehenden Ansprüche, bei der die Drehzahl der Schnecke (223) um die Welle (224) einstellbar ist.

9. Einrichtung nach einem der vorhergehenden Ansprüche, bei der die Schnecke einen größeren Außendurchmesser als die Extruderschnecke hat.

10. Einrichtung nach einem der vorhergehenden Ansprüche, enthaltend eine kegelstumpfförmige Übergangszone, im Bereich welcher der Durchmesser des Strömungsweges für das Polymer reduziert ist, wenn die Schnecke verdichtetes Polymer dem Schneckenextruder zuführt.

11. Einrichtung nach einem der vorhergehenden Ansprüche, bei der mindestens ein Teil der Außenfläche der Schnecke (223) einen Abstand von weniger als 1.000 um von einer Innenfläche der Einrichtung (231) hat, um mindestens von einem Teil der Außenfläche der Schnecke, wenn die Schnecke rotiert, Polymer abzustreifen.

12. Einrichtung nach Anspruch 11, bei der dieser Abstand im Bereich von 75 bis 500 µm liegt.

13. Einrichtung nach einem der vorhergehenden Ansprüche, bei der der Schnekken-extruder beheizbar ist.

14. Einrichtung nach einem der vorhergehenden Ansprüche, die weiterhin ein Schneidgerät (234) an dem Extrusionsauslaß (233) zum Zerschneiden des extrudierten Polymers in Granulate aufweist.

15. Einrichtung nach Anspruch 14, welche weiterhin einen Abscheider (248) zum Abscheiden von Granulaten mit einer erwünschten Korngröße von den Granulaten des extrudierten Polymers und Mittel (247) zum Zurückführen des Restes des extrudierten Polymers zu dem Einlaß aufweist.

16. Einrichtung nach Anspruch 15, bei der der Abscheider ein Zyklonenabscheider (248) ist und die Mittel zum Zurückführen des Polymers zu dem Einlaß einen Luftstrom beinhalten.

17. Ein Verfahren zur Wiederaufbereitung von thermoplastischem Polymerabfall, welches darin besteht, dieses Polymer in losem festem Zustand in eine Polymerzuführvorrichtung (22) zum Zuführen von verdichtetem Polymer zu einem Schneckenextruder (221) einzuführen, Umformen des Polymers in einen komprimierten und geschmolzenen, plastischen Zustand in dem Schneckenextruder, und Extrudieren des Polymers durch einen Auslaß (233) aus dem Extruder, bei welchem Verfahren die Polymerzuführvorrichtung eine Schnecke (223) aufweist, die mit Abstand um eine dem losen, festen Polymer ausgesetzten Welle (224) drehbar ist, und wobei das Verfahren darin besteht, die Schnecke in Rotation zu setzen und dadurch das lose, feste Polymer zu verdichten und entlang der Welle dem Schneckenextruder zuzuführen, während loses, festes Polymer von der Welle infolge des Abstandes zwischen der Schnecke und der Welle abgestreift wird und außerdem loses, festes Polymer von mindestens einem Teil der Außenfläche der Schnecke durch eine Innenfläche der Einrichtung abgestreift wird, welche Innenfläche einen Abstreifabstand von der Schnecke hat.

18. Ein Verfahren nach Anspruch 7, bei dem die Welle (224) im wesentlichen in Linie mit der Rotationsachse des Schneckenextruders (221) liegt und die Schnecke (223) Schneckengänge hat, die die gleiche Windungsrichtung wie die Schnecke des Extruders hat, welches darin besteht, die Schnecke und den Extruder in der gleichen Richtung in Rotation zu versetzen und die Drehzahl der Schnecke relativ zur Welle einzustellen.

19. Ein Verfahren nach Anspruch 18 oder 19, welches darin besteht, den Strömungsweg des Polymers zu verkleinern, wenn es zwischen der Polymerzuführvorrichtung und dem Schneckenextruder zugeführt wird.

20. Ein Verfahren nach einem der Ansprüche 17 bis 19, bei dem die lose, feste Form, in der der thermoplastische Polymerabfall in die Zuführvorrichtung eingespeist wird, aus Streifen, Flocken, Film- oder Blattmaterial besteht.

21. Ein Verfahren nach einem der Ansprüche 17 bis 20, welches darin besteht, das extrudierte Polymer in Partikel umzuformen.

22. Ein Verfahren nach Anspruch 21, welches darin besteht, die Partikel einer Größenklassierung zu unterwerfen, die Partikel einer erwünschten Größe abzuscheiden und den Rest der Partikel wieder der Polymerzuführvorrichtung zuzuführen.

## Revendications

1. Appareil pour traiter un polymère thermoplastique sous forme solide en vrac, par compactage, fusion et extrusion, comprenant une entrée (228) pour le polymère en vrac, une extrudeuse à vis (221) qui est adaptée pour transformer le polymère en un état plastique comprimé et fondu, et un moyen d'alimentation (222) pour compacter le polymère en vrac provenant de l'entrée et l'introduire dans la vis d'extrusion; le moyen d'alimentation comprenant une trémie (223) qui peut tourner autour d'un arbre (224) qui, en utilisation, est exposé au polymère solide en vrac traversant l'appareil, la trémie présentant par rapport à l'arbre un jeu tel que lors d'une rotation par rapport à l'arbre, la trémie compacte et alimente le polymère solide en vrac le long de l'arbre et racle ledit polymère de l'arbre, et une partie de la surface extérieure de la trémie (223) et une surface intérieure de l'appareil ont entre elles un jeu de raclage, de telle sorte que la surface intérieure de l'appareil racle le polymère d'au moins une partie de la surface extérieure de la trémie.

2. Appareil selon la revendication 1, dans lequel le jeu entre la trémie (223) et l'arbre (224) est de 50 à 1000 µm.

3. Appareil selon la revendication 2, dans lequel le jeu entre la trémie (223) et l'arbre (224) est de 75 à 500 µm.

4. Appareil selon l'une quelconque des revendications précédentes, dans lequel la trémie (223) est essentiellement hélicoïdale.

5. Appareil selon l'une quelconque des revendications précédentes, dans lequel l'arbre (224) est essentiellement aligné selon l'axe de rotation de l'extrudeuse à vis (221).

6. Appareil selon l'une quelconque des revendications précédentes, dans lequel l'arbre (224) peut tourner par rapport à l'axe de rotation de la trémie (223).

7. Appareil selon la revendication 6, dans lequel l'arbre (224) est une partie amont sans aube de l'extrudeuse à vis (221).

8. Appareil selon l'une quelconque des revendications précédentes, dans lequel la vitesse de rotation de la trémie (223) autour de l'arbre (224) est réglable.

9. Appareil selon l'une quelconque des revendications précédentes, dans lequel la trémie présente un diamètre extérieur plus grand que celui de la vis de l'extrudeuse.

10. Appareil selon l'une quelconque des revendications précédentes comprenant une zone de transition tronconique dans lequel le diamètre du parcours d'écoulement du polymère se réduit lorsque la trémie alimente du polymère compacté vers l'extrudeuse à vis.

11. Appareil selon l'une quelconque des revendications précédentes, dans lequel au moins une partie de la surface extérieure de la trémie (223) présente un jeu inférieur à 1000 µm par rapport à une surface intérieure de l'appareil (231), pour racler le polymère d'au moins une partie de la surface extérieure de la trémie lorsque la trémie tourne.

12. Appareil selon la revendication 11, dans lequel ledit jeu est de 75 à 500 µm.

13. Appareil selon l'une quelconque des revendications précédentes, dans lequel l'extrudeuse à vis peut être chauffée.

14. Appareil selon l'une quelconque des revendications précédentes, comprenant en outre une lame de coupe (234) à la sortie d'extrusion (233) pour découper en granulés le polymère extrudé.

15. Appareil selon la revendication 14, comprenant en outre un séparateur (248) pour séparer les granulés d'une taille souhaitée de granulés du polymère extrudé et un moyen (247) pour renvoyer le reste du polymère extrudé vers l'entrée.

16. Appareil selon la revendication 15, dans lequel le séparateur est un séparateur à cyclone (248) et le moyen pour renvoyer le polymère vers l'entrée comprend un écoulement d'air.

17. Procédé de récupération de polymère thermoplastique de rebut, qui comprend des étapes consistant à faire passer ledit polymère sous forme solide en vrac dans un moyen (222) d'alimentation de polymère pour alimenter le polymère compacté vers une extrudeuse à vis (221), à transformer le polymère et un état plastique comprimé et fondu dans l'extrudeuse à vis, et à extruder le polymère de l'extrudeuse par une sortie (233); le moyen d'alimentation de polymère comprenant une trémie (223) apte à tourner avec un jeu autour d'un arbre (224) exposé au polymère solide en vrac, le précédé comportant l'étape consistant à faire tourner la trémie et ainsi compacter et alimenter le polymère solide en vrac le long de l'arbre vers l'extrudeuse à vis tout en raclant le polymère solide en vrac de l'arbre grâce au jeu entre la trémie et l'arbre, et en raclant le polymère solide en vrac d'au moins une partie de la surface extérieure de la trémie par une surface intérieure de l'appareil, laquelle surface intérieure présente un jeu de raclage par rapport à la trémie.

18. Procédé selon la revendication 17, dans lequel l'arbre (224) est essentiellement aligné sur l'axe de rotation de l'extrudeuse à vis (221), et la trémie (223) présente des pales qui vont dans le même sens que la vis de l'extrudeuse, lequel procédé comprend l'étape consistant à faire tourner la trémie et l'extrudeuse dans le même sens et à ajuster la vitesse de rotation de la trémie par rapport à celle de l'arbre.

19. Procédé selon la revendication 18 ou la revendication 19, qui comprend l'étape consistant à réduire le parcours d'écoulement du polymère lorsqu'il est alimenté entre le moyen d'avancement de polymère et l'extrudeuse à vis.

20. Procédé selon l'une quelconque des revendications 17 à 19, dans lequel la forme solide en vrac dans laquelle le polymère thermoplastique de rebut est passé dans le moyen d'alimentation est une forme de chutes de coupe, de flocons, de films ou de feuilles.

21. Procédé selon l'une quelconque des revendications 17 à 20, qui comprend l'étape consistant à transformer en particules le polymère extrudé.

22. Procédé selon la revendication 21, qui comprend l'étape consistant à soumettre les particules à une séparation de taille, à séparer les particules d'une taille souhaitée et à renvoyer le reste des particules vers le moyen d'alimentation de polymère.
